# EUROPEAN PATENT APPLICATION

(11) **EP 4 261 934 A1**
(43) Date of publication of application: **18.10.2023**
(21) Application number: 23160936.3
(22) Date of filing: 09.03.2023
(51) Int. Cl.: H01M 4/133, H01M 4/36, H01M 4/587, H01M 4/62

(54) **NEGATIVE ELECTRODE, NON-AQUEOUS ELECTROLYTE SECONDARY BATTERY, AND METHOD OF PRODUCING NEGATIVE ELECTRODE**

(30) Priority: 12.04.2022 JP 2022065568
(71) Applicant: Prime Planet Energy & Solutions, Inc., Chuo-ku Tokyo 103-0022 (JP)
(72) Inventor: TSUZUKI, Kouhei, Tokyo, 103-0022 (JP); ONODERA, Naoto, Tokyo, 103-0022 (JP); SANO, Hideki, Tokyo, 103-0022 (JP); MORIKAWA, Yuki, Tokyo, 103-0022 (JP); KOJIMA, Yurika, Tokyo, 103-0022 (JP)
(74) Representative: Kuhnen & Wacker Patent- und Rechtsanwaltsbüro PartG mbB

(57) **Abstract**

The present disclosure relates to a negative electrode (100) for a non-aqueous electrolyte secondary battery, the negative electrode (100) comprising an active material layer (20), wherein the active material layer (20) contains graphite particles (21), fibrous carbon (22), silicon-containing particles (23), and a binder, a BET specific surface area of the graphite particles (21) is 3.5 m²/g or less, the fibrous carbon (22) includes a carbon nanotube, each of the silicon-containing particles (23) includes a domain composed of carbon and a domain composed of silicon and having a size of 50 nm or less, and an oxygen content ratio in each of the silicon-containing particles (23) is 7 wt% or less. According to the present disclosure, a negative electrode (100) and a non-aqueous electrolyte secondary battery (200) are provided to suppress decrease in initial capacity and cycling performance.

## Description

### CROSS REFERENCE TO RELATED APPLICATIONS

This nonprovisional application is based on Japanese Patent Application No. 2022-065568 filed on April 12, 2022 with the Japan Patent Office, the entire contents of which are hereby incorporated by reference.

### BACKGROUND OF THE INVENTION

### Field of the Invention

The present disclosure relates to a negative electrode, and also relates to a method of producing the negative electrode, and a non-aqueous electrolyte secondary battery.

### Description of the Background Art

WO 2016/136178 proposes a negative electrode including silicon-containing particles.

### SUMMARY OF THE INVENTION

When a size of a silicon domain in each of the silicon-containing particles is large, a crack is likely to be formed in the silicon domain due to repeated charging and discharging, with the result that cycling performance is likely to be decreased. The size of the silicon domain can be made small by dispersing the silicon domain in a fine carbon domain or oxygen domain; however, such a fine carbon domain leads to decreased force of binding to the silicon-containing particles by a binder, with the result that it tends to be difficult to secure electric conductivity. On the other hand, when an oxygen content ratio is increased to attain a small size of the silicon domain, an initial capacity tends to be likely to be decreased. It is an object of the present disclosure to provide a negative electrode and a non-aqueous electrolyte secondary battery to suppress decrease in initial capacity and cycling performance.

The present disclosure provides a negative electrode, a non-aqueous electrolyte secondary battery, and a method of producing the negative electrode as follows.
[1] A negative electrode for a non-aqueous electrolyte secondary battery, the negative electrode comprising an active material layer, wherein the active material layer contains graphite particles, fibrous carbon, silicon-containing particles, and a binder, a BET specific surface area of the graphite particles is 3.5 m²/g or less, the fibrous carbon includes a carbon nanotube, each of the silicon-containing particles includes a domain composed of carbon and a domain composed of silicon and having a size of 50 nm or less, and an oxygen content ratio in each of the silicon-containing particles is 7 wt% or less.
[2] The negative electrode according to [1], wherein the binder contains styrene-butadiene rubber (SBR), carboxymethyl cellulose (CMC), and polyacrylic acid (PAA).
[3] The negative electrode according to [1] or [2], wherein the carbon nanotube is a single-walled carbon nanotube.
[4] The negative electrode according to any one of [1] to [3], wherein a ratio of an average particle size of the silicon-containing particles to an average particle size of the graphite particles is 0.1 or more and 0.25 or less.
[5] The negative electrode according to any one of [1] to [4], wherein the carbon nanotube exists around the silicon-containing particles.
[6] The negative electrode according to [2], wherein the polyacrylic acid (PAA) exists around the silicon-containing particles.
[7] The negative electrode according to any one of [1] to [6], wherein the number of contact points between the silicon-containing particles and the fibrous carbon is more than the number of contact points between the graphite particles and the fibrous carbon.
[8] The negative electrode according to [2] or [6], wherein the number of contact points between the silicon-containing particles and the polyacrylic acid (PAA) is more than the number of contact points between the graphite particles and the polyacrylic acid (PAA).
[9] A non-aqueous electrolyte secondary battery comprising: the negative electrode according to any one of [1] to [8]; and an exterior package.
[10] The non-aqueous electrolyte secondary battery according to [9], comprising an electrode assembly including the negative electrode, wherein a ratio T/D of a thickness T of the electrode assembly to a distance D between the electrode assembly and the exterior package is 2% or more at a voltage of 3 V or less.
[11] A method of producing the negative electrode according to [2], the method comprising preparing a slurry for forming an active material layer, wherein the preparing of the slurry includes: a) obtaining a mixture a by mixing silicon-containing particles, a dispersion solvent, and at least one selected from a group consisting of polyacrylic acid (PAA) and fibrous carbon; b) obtaining a mixture b by mixing graphite particles, carboxymethyl cellulose (CMC), a dispersion solvent, and one of the polyacrylic acid (PAA) and the fibrous carbon, the one of the polyacrylic acid (PAA) and the fibrous carbon being not mixed in a); c) obtaining a mixture c by mixing the mixture a, the mixture b, and a dispersion solvent; and d) mixing the mixture c and styrene-butadiene rubber (SBR).

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a schematic diagram showing an exemplary configuration of a negative electrode according to the present embodiment.
Fig. 2 is a schematic flowchart showing a method of producing the negative electrode.
Fig. 3 is a schematic diagram showing an exemplary configuration of a battery according to the present embodiment.
Fig. 4 is a schematic diagram showing an exemplary configuration of an electrode assembly according to the present embodiment.

### DESCRIPTION OF THE PREFERRED EMBODIMENTS

Hereinafter, embodiments of the present disclosure will be described with reference to figures; however, the present disclosure is not limited to the below-described embodiments. In all the below-described figures, scales are appropriately adjusted to facilitate understanding of respective components, and the scales of the respective components shown in the figures do not necessarily coincide with actual scales of the respective components.

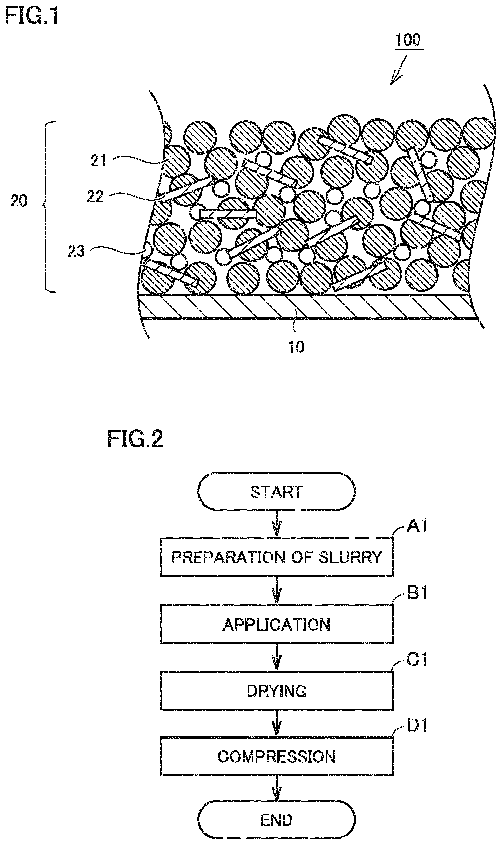

A negative electrode according to the present disclosure will be described with reference to figures. A negative electrode 100 shown in Fig. 1 is a negative electrode for a non-aqueous electrolyte secondary battery. Negative electrode 100 includes a current collector 10 and an active material layer 20. In the negative electrode of the present disclosure, the active material layer may be provided only on one side of the current collector, or may be provided on each of both sides of the current collector.

Current collector 10 is an electrically conductive sheet. Current collector 10 may include, for example, an aluminum (Al) foil, a copper (Cu) foil, or the like. Current collector 10 may have a thickness of, for example, 5 µm to 50 µm. For example, a coating layer may be formed on a surface of current collector 10. The coating layer may include, for example, an electrically conductive carbon material or the like. The coating layer may have a thickness smaller than that of active material layer 20, for example.

The thickness of active material layer 20 is preferably 100 µm or more and 260 µm or less, and is more preferably 120 µm or less and 200 µm or more. A packing density of active material layer 20 is preferably 1.2 g/cc or more and 1.7 g/cc or less, and is more preferably 1.45 g/cc or more and 1.65 g/cc or less. Active material layer 20 may be provided with pores. When active material layer 20 is provided with the pores, a porosity is preferably 20% or more and 35% or less. Active material layer 20 includes graphite particles 21, fibrous carbon 22, and silicon-containing particles 23 as an active material. Active material layer 20 further contains a binder (not shown).

Graphite particles 21 can be artificial graphite. A BET specific surface area of graphite particles 21 is, for example, 3.5 m²/g or less, is preferably 0.5 m²/g or more and 3.5 m²/g or less, and is more preferably 1 m²/g or more and 2.0 m²/g or less. The BET specific surface area is measured by a multipoint BET method. Each of graphite particles 21 may have any size. An average particle size of graphite particles 21 is preferably 8 µm or more and 30 µm or less. The average particle size in the present specification represents a particle size corresponding to a cumulative particle volume of 50% from the smallest particle size with respect to the entirety thereof in a volumebased particle size distribution. In the present specification, the average particle size of the active material particles may be also stated as D50. The average particle size can be measured by a laser diffraction/scattering method. Since the graphite particles having relatively broad particle sizes and a relatively low BET specific surface area are excellent in packing property and are expanded by a small amount during charging and discharging, disconnection (isolation) of an electrically conductive path from surrounding particles is likely to be suppressed.

Fibrous carbon 22 includes a carbon nanotube (hereinafter, also referred to as CNT). A length of the carbon nanotube is preferably 0.01 µm or more and 5 µm or less. A diameter of the carbon nanotube is preferably 50 nm or less, and is more preferably 15 nm or less. Since active material layer 20 includes the carbon nanotube, isolation of graphite particles 21 and silicon-containing particles 23 tends to be likely to be suppressed. From the viewpoint of facilitating the suppression of isolation of silicon-containing particles 23, the carbon nanotube preferably exists around silicon-containing particles 23. In active material layer 20, a mass ratio of fibrous carbon 22 and graphite particles 21 may be, for example, 0.001:99.999 to 10:90, is preferably 0.005:99.995 to 1:99, and is more preferably 0.01:99.99 to 0.1:99.9. The carbon nanotube is preferably a single-walled carbon nanotube (hereinafter, also referred to as SWCNT). The single-walled carbon nanotube is preferably a carbon nanostructure in which one layer of carbon hexagon network planes forms one cylindrical shape.

Each of silicon-containing particles 23 includes: a domain composed of carbon; and a domain composed of silicon. A size of the domain composed of silicon is 50 nm or less. Since the size of the domain composed of silicon is in the above range, cracking tends to be likely to be suppressed. An oxygen content ratio in each of the silicon-containing particles is 7 wt% or less. Since the oxygen content ratio in each of the silicon-containing particles is in the above range, a capacity tends to be likely to be improved. The size of the domain composed of silicon and the oxygen content ratio in each of the silicon-containing particles are measured in accordance with a method described in the below-described section of Examples. An average particle size of silicon-containing particles 23 is preferably 2 µm or more and 8 µm or less, and is more preferably 3 µm or more and 5 µm or less. A ratio of the average particle size of silicon-containing particles 23 to the average particle size of graphite particles 21 is preferably 0.1 or more and 0.25 or less. Since the ratio is within the above range, silicon-containing particles 23 are disposed between matrices of graphite particles 21, with the result that isolation of silicon-containing particles 23 tends to be likely to be suppressed. In active material layer 20, the mass ratio of silicon-containing particles 23 and graphite particles 21 may be, for example, 30:70 to 1:99, is preferably 20:80 to 1:99, and is more preferably 10:90 to 1:99. Silicon-containing particles 23 may be provided with pores therein. When silicon-containing particles 23 have pores therein, a porosity is preferably 3 volume% or more. A surface of each of silicon-containing particles 23 may be coated with amorphous carbon.

The binder can bind graphite particles 21, fibrous carbon 22, and silicon-containing particles 23. The binder can bind graphite particles 21, fibrous carbon 22 and silicon-containing particles 23 to current collector 10. For example, the binder may further include at least one selected from a group consisting of a fluororesin such as a polyvinylidene difluoride (PVdF), poly(vinylidenefluoride-co-hexafluoropropylene) (PVdF-HFP), or polytetrafluoroethylene (PTFE), an acrylic resin such as polyacrylonitrile, polyimide, polyamide, polyolefin, polyvinyl alcohol, polyacrylic acid (PAA), carboxymethyl cellulose (CMC), polyethylene oxide (PEO), and styrene-butadiene rubber (SBR). The binder preferably contains the styrene butadiene rubber (SBR), the carboxymethyl cellulose (CMC) and the polyacrylic acid (PAA). A blending amount of the binder may be, for example, 0.1 to 10 parts by mass with respect to 100 parts by mass of the active material in active material layer 20. When the binder includes the SBR, a content ratio of the SBR in active material layer 20 is preferably 0.5 wt% or more and 5 wt% or less, and is more preferably 1 wt% or more and 3 wt% or less. When the binder includes the CMC, a content ratio of the CMC in active material layer 20 is preferably 0.3 wt% or more and 3 wt% or less, and is more preferably 0.5 wt% or more and 1.5 wt% or less. When the binder contains the PAA, the content ratio of the PAA in active material layer 20 is preferably 0.5 wt% or more and 5 wt% or less, and is more preferably 1.3 wt% or more and 3 wt% or less. When the binder includes the PAA, the PAA preferably exists around silicon-containing particles 23 from the viewpoint of facilitating the suppression of isolation of silicon-containing particles 23.

The number of contact points between silicon-containing particles 23 and fibrous carbon 22 is preferably more than the number of contact points between graphite particles 21 and fibrous carbon 22 from the viewpoint of suppressing the isolation of silicon-containing particles 23. The number of contact points between silicon-containing particles 23 and the PAA is preferably more than the number of contact points between graphite particles 21 and the PAA from the viewpoint of suppressing the isolation of silicon-containing particles 23. The number of the contact points is measured by observation on a cross section of the negative electrode with a scanning electron microscope (SEM).

As shown in Fig. 2, a method of producing negative electrode 100 can include preparation of a slurry (A1), application (B1), drying (C1), and compression (D1). The preparation of the slurry (A1) can include the following steps a) to d):
a) obtaining a mixture a by mixing silicon-containing particles, a dispersion solvent, and at least one selected from a group consisting of polyacrylic acid (PAA) and fibrous carbon (preferably both the PAA and the fibrous carbon);
b) obtaining a mixture b by mixing graphite particles, carboxymethyl cellulose (CMC), and a dispersion solvent, as well as, as required, one of the polyacrylic acid (PAA) and the fibrous carbon, the one of the polyacrylic acid (PAA) and the fibrous carbon being not mixed in step a);
c) obtaining a mixture c by mixing mixture a, mixture b, and a dispersion solvent; and
d) mixing mixture c and styrene-butadiene rubber (SBR).

The mixing in each of steps a) and b) can be performed under conditions that a kneading load is made larger than that in the mixing in each of steps c) and d). Examples of a method of making the kneading load large include: making a solid content high; making the number of rotations of a kneader high; and making a kneading time long.

Examples of the dispersion solvent include water. Any amount of the dispersion solvent is usable. That is, the slurry can have any solid content concentration (solid content mass fraction). The slurry may have a solid content concentration of, for example, 40% to 80%. Any stirring apparatus, mixing apparatus, and dispersing apparatus can be used for the mixing and kneading.

The application (B 1) can include applying the slurry onto a surface of a substrate so as to form an applied film. In the present embodiment, the slurry can be applied to the surface of the substrate by any application apparatus. For example, a slot die coater, a roll coater, or the like may be used.

The drying (C1) can include heating the applied film to dry. In the present embodiment, any drying apparatus can be used as long as the applied film can be heated. For example, the applied film may be heated by a hot air dryer or the like. By heating the applied film, the organic solvent can be evaporated. Thus, the organic solvent can be substantially removed.

The compression (D1) can include compressing the dried applied film so as to form an active material layer. In the present embodiment, any compression apparatus can be used. For example, a rolling machine or the like may be used. The dried applied film is compressed to form the active material layer, thereby completing negative electrode 100. Negative electrode 100 can be cut into a predetermined planar size in accordance with the specification of the battery. Negative electrode 100 may be cut to have a planar shape in the form of a strip, for example. Negative electrode 100 may be cut to have a quadrangular planar shape, for example.

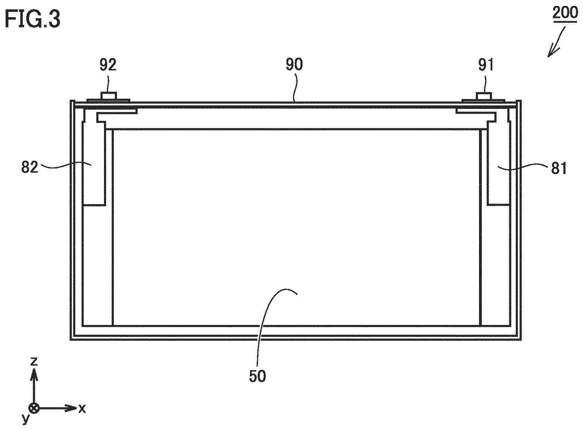

Fig. 3 is a schematic diagram showing an exemplary battery according to the present embodiment. The battery is a non-aqueous electrolyte secondary battery. The battery is preferably a prismatic battery. A battery 200 shown in Fig. 3 includes an exterior package 90. Exterior package 90 accommodates an electrode assembly 50 and an electrolyte (not shown). Electrode assembly 50 is connected to a positive electrode terminal 91 by a positive electrode current collecting member 81. Electrode assembly 50 is connected to a negative electrode terminal 92 by a negative electrode current collecting member 82. Electrode assembly 50 may be any of a wound type and a stacked type. Electrode assembly 50 preferably has a flat shape. Electrode assembly 50 includes negative electrode 100. In Fig. 3, when a distance (length in the Y direction) between electrode assembly 50 and exterior package 90 as viewed in the X direction is defined as D and the thickness (length in the Y direction) of electrode assembly 50 is defined as T, a ratio T/D is preferably 2% or more at a voltage of 3 V or less. A resin sheet (electrode assembly holder) may be disposed between electrode assembly 50 and exterior package 90.

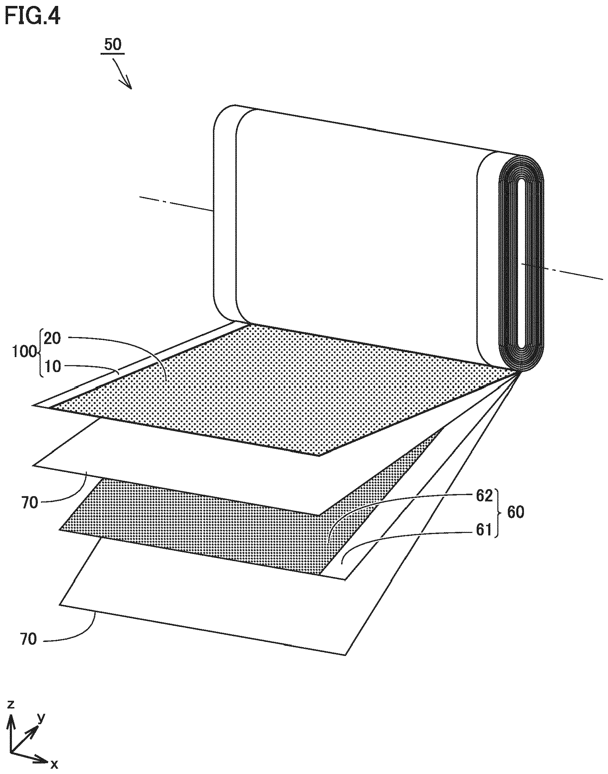

Fig. 4 is a schematic diagram showing an exemplary electrode assembly according to the present embodiment. Electrode assembly 50 is the wound type. Electrode assembly 50 includes a positive electrode 60, a separator 70, and negative electrode 100. That is, battery 200 includes negative electrode 100. Positive electrode 60 includes a positive electrode active material layer 62 and a positive electrode current collector 61. Negative electrode 100 includes active material layer 20 and current collector (negative electrode current collector) 10.

### [Examples]

Hereinafter, the present disclosure will be described more in detail with reference to examples. The notations "%" and "parts" in the examples represent mass% and parts by mass, unless otherwise indicated particularly.

### <Example 1>

### [Production of Negative Electrode Plate]

A negative electrode slurry (slurry for forming an active material layer) was produced to attain the following blending ratio (mass ratio): graphite/silicon-containing particles/SWCNT/CMC/PAA/SBR = 94/6/0.02/1/1/1. In the preparing of the negative electrode slurry, mixing/kneading was performed in the following procedure. HIVIS MIX Model 2P-1 provided by PRIMIX Corporation was used as a kneader.
(1) Dry-mixed silicon-containing particles (D50 = 3 µm) and PAA were kneaded with a conductive material (SWCNT consisting of one layer, water-soluble paste having a solid content ratio of 1%) and water under a condition involving a large load (solid content ratio: 67%; peripheral speed: 50 rpm-90 minutes), thereby obtaining a mixture 1.
(2) A negative electrode active material [graphite particles (D50 = 22 µm, BET = 1.4 m²/g)], CMC, and water were kneaded under a condition involving a large kneading load (solid content ratio: 66%; peripheral speed: 50 rpm-90 minutes), thereby obtaining a mixture 2.
(3) Mixture 1, mixture 2, and water were kneaded, thereby obtaining a mixture 3 (peripheral speed: 30 rpm-30 minutes).
(4) SBR and a dispersion solvent were added to mixture 3 for dilution and mixing (peripheral speed: 30 rpm-30 minutes).

As an optimal range to attain a large kneading load, a water content ratio of the material, to be applied, at the time of kneading was adjusted as follows. When water is added to defined composition amounts of powders of the graphite particles and the Si-containing particles, a water content ratio with which torque required for mixing is maximized is defined as A₀% and a water content per 100 g of the mixed powders corresponding to water content ratio A₀% is defined as A₁ ml, and an ideal solid content ratio B₀% with which the maximum torque is provided was calculated by the following formula: B₀ = 100-A₀ = [100/(100+A₁)]×100 (%). Further, as a range involving a large load, the number of rotations of the kneader was set to 50 rpm or more, whereas as a range involving a small load, the number of rotations of the kneader was set to 30 rpm or less.

The produced negative electrode slurry was applied onto a 10-µm Cu foil and was dried, pressing was performed to attain a predetermined thickness, and processing was performed to attain a predetermined size, thereby obtaining a negative electrode plate. An applied coating on each of both surfaces thereof was 215 m²/g, a thickness thereof was 134 µm, and a packing density thereof was 1.60 g/cc. The packing density (g/cc) is calculated by the following formula: packing density Z = X/Y, where the applied coating of the active material layer is X m²/g and the thickness of the active material layer is Y µm.

### [Production of Positive Electrode Plate]

A positive electrode active material [lithium-nickel-cobalt-manganese composite oxide (NCM)], a conductive material [acetylene black (AB)], a binder (PVDF) and a solvent (NMP) were kneaded using a stirrer/granulator, thereby obtaining a positive electrode slurry. The positive electrode slurry was produced to attain the following blending ratio (mass ratio): positive electrode active material/conductive material/binder = 100/1/1. The produced positive electrode slurry was applied onto a 15-µm Al foil and was dried, pressing was performed to attain a predetermined thickness, and processing was performed to attain a predetermined size, thereby obtaining a positive electrode plate.

### [Production of Non-Aqueous Electrolyte Secondary Battery]

A lead was attached to each of the negative electrode and the positive electrode, and the respective electrodes were stacked with a separator interposed therebetween, thereby producing an electrode assembly. The produced electrode assembly was inserted into an exterior package constituted of an aluminum laminate sheet, a non-aqueous electrolyte was injected thereinto, and an opening of the exterior package was sealed, thereby producing a test cell (laminate cell). For the non-aqueous electrolyte, a solvent was used in which 1M LiPF₆ was used as a Li salt with EC/FEC/EMC/DMC = 15/5/40/40 (vol%). A ratio T/D of a thickness T of the electrode assembly to a distance D between the electrode assembly and the exterior package was 2% or more at a voltage of 3 V or less.

### [Evaluation on Size of Domain Composed of Silicon]

The negative electrode plate was subjected to an FIB process, was then observed with a STEM (JEM Scanning Transmission Electron Microscope provided by JEOL) to confirm elements (Si, C) by EDX mapping, and then the size of the domain composed of silicon was determined from shape and contrast obtained in a HAADF image (High-Angle Annular Dark Field High Angle Scattering Dark image) of a BF image (bright field image). A result is shown in Table 1.

### [Measurement of Oxygen Content Ratio]

An oxygen analyzing apparatus (EMGA-830 provided by Horiba) was used. An amount of oxygen was extracted by a hot melting method in an inert gas. A sample was melted in a flux of Ni/Sn, O in the sample was converted to CO or CO₂ gas, and an amount thereof was measured, thereby obtaining an oxygen content ratio. A result is shown in Table 1.

### [Measurement of BET Specific Surface Area]

A predetermined weight of the negative electrode active material was inserted into a cell and measurement was performed. After the measurement, a BET specific surface area per weight of the active material was calculated. A result is shown in Table 1.

### [Initial/Cycle Evaluations]

CC charging (0.05C_4.2V) was performed under an environment of 25°C, then CC discharging (0.05C_2.5V cut) was performed for one cycle, and initial efficiency is regarded as (discharging capacity of 1st cyc)/(charging capacity of 1st cyc). Next, CCCV charging (0.2C_4.15V _0.1C cut) was performed under an environment of 25°C, and then a cycle test was performed until the 200th cycle was reached with CC discharging (0.33C_3V cut) being regarded as one cycle. A cycle retention was regarded as (discharging capacity of 200th cyc)/(discharging capacity of 1st cyc). A result is shown in Table 1.

### <Comparative Examples 1 to 4>

Each of non-aqueous electrolyte secondary batteries was produced in the same manner as in Example 1 except that a negative electrode was produced using a size of a domain composed of silicon, silicon-containing particles having an oxygen content ratio and an average particle size, graphite particles having an average particle size and a BET specific surface area, and fibrous carbon as shown in Table 1 (a mixture ratio was adjusted to attain the same capacity as in Example 1). Results are shown in Table 1.

**[Table 1]**

| | Silicon-Containing Particles | | | Graphite Particles | | Type of Fibrous Carbon | Initial Efficiency (%) | Cycle Retention (%) |
|---|---|---|---|---|---|---|---|---|
| | Size of Domain Composed of Silicon (nm) | Oxygen Content (wt%) | D50 (µm) | D50 (µm) | BET Specific Surface Area (m²/g) | | | |
| Example 1 | 10 | 5 | 3 | 22 | 1.4 | SWCNT | 89 | 95 |
| Comparative Example 1 | 1000 | 8 | 10 | 22 | 1.4 | SWCNT | 85 | 84 |
| Comparative Example 2 | 50 | 35 | 7 | 22 | 1.4 | SWCNT | 81 | 87 |
| Comparative Example 3 | 50 | 35 | 7 | 18 | 2.5 | MWCNT | 83 | 91 |
| Comparative Example 4 | 50 | 35 | 7 | 23 | 4.1 | MWCNT | 82 | 91 |

Although the embodiments of the present invention have been described and illustrated in detail, it is clearly understood that the same is by way of illustration and example only and is not to be taken by way of limitation, the scope of the present invention being interpreted by the terms of the appended claims. The scope of the present invention is defined by the terms of the claims, and is intended to include any modifications within the scope and meaning equivalent to the terms of the claims.

## Claims

1. A negative electrode (100) for a non-aqueous electrolyte secondary battery, the negative electrode (100) comprising an active material layer (20), wherein
the active material layer (20) contains graphite particles (21), fibrous carbon (22), silicon-containing particles (23), and a binder,
a BET specific surface area of the graphite particles (21) is 3.5 m²/g or less,
the fibrous carbon (22) includes a carbon nanotube,
each of the silicon-containing particles (23) includes a domain composed of carbon and a domain composed of silicon and having a size of 50 nm or less, and
an oxygen content ratio in each of the silicon-containing particles (23) is 7 wt% or less.

2. The negative electrode according to claim 1, wherein the binder contains styrene-butadiene rubber (SBR), carboxymethyl cellulose (CMC), and polyacrylic acid (PAA).

3. The negative electrode according to claim 1 or 2, wherein the carbon nanotube is a single-walled carbon nanotube.

4. The negative electrode according to claim 1 or 2, wherein a ratio of an average particle size of the silicon-containing particles (23) to an average particle size of the graphite particles (21) is 0.1 or more and 0.25 or less.

5. The negative electrode according to claim 1 or 2, wherein the carbon nanotube exists around the silicon-containing particles (23).

6. The negative electrode according to claim 2, wherein the polyacrylic acid (PAA) exists around the silicon-containing particles (23).

7. The negative electrode according to claim 1 or 2, wherein the number of contact points between the silicon-containing particles (23) and the fibrous carbon (22) is more than the number of contact points between the graphite particles (21) and the fibrous carbon (22).

8. The negative electrode according to claim 2 or 6, wherein the number of contact points between the silicon-containing particles (23) and the polyacrylic acid (PAA) is more than the number of contact points between the graphite particles (21) and the polyacrylic acid (PAA).

9. A non-aqueous electrolyte secondary battery comprising: the negative electrode (100) according to claim 1 or 2; and an exterior package (90).

10. The non-aqueous electrolyte secondary battery according to claim 9, comprising an electrode assembly (50) including the negative electrode (100), wherein a ratio T/D of a thickness T of the electrode assembly (50) to a distance D between the electrode assembly (50) and the exterior package (90) is 2% or more at a voltage of 3 V or less.

11. A method of producing the negative electrode (100) according to claim 2, the method comprising preparing a slurry for forming an active material layer, wherein
the preparing of the slurry includes
a) obtaining a mixture a by mixing silicon-containing particles, a dispersion solvent, and at least one selected from a group consisting of polyacrylic acid (PAA) and fibrous carbon,
b) obtaining a mixture b by mixing graphite particles, carboxymethyl cellulose (CMC), a dispersion solvent, and one of the polyacrylic acid (PAA) and the fibrous carbon, the one of the polyacrylic acid (PAA) and the fibrous carbon being not mixed in a),
c) obtaining a mixture c by mixing the mixture a, the mixture b, and a dispersion solvent, and
d) mixing the mixture c and styrene-butadiene rubber (SBR).
